# EUROPÄISCHE PATENTSCHRIFT

(11) **EP 0 453 697 B1**
(45) Veröffentlichungstag und Bekanntmachung des Hinweises auf die Patenterteilung: **30.11.1994**
(21) Anmeldenummer: 90810299.9
(22) Anmeldetag: 17.04.1990
(51) Int. Cl.: B32B 31/00, B32B 31/20

(54) **Verfahren und Vorrichtung zum Herstellung einer Verbundbahn**
Method and apparatus for manufacturing a laminated web
Procédé et dispositif de fabrication d'une feuille stratifiée

(43) Veröffentlichungstag der Anmeldung: 30.10.1991
(73) Patentinhaber: Maschinenfabrik Polytype AG, CH-1701 Fribourg (CH)
(72) Erfinder: Schöllkopf, Ernst, CH-1718 Rechthalten (CH); Rimmele, Walter, CH-1700 Freiburg (CH); Stiwitz, Roland, CH-3186 Düdingen (CH); Vogel, Konrad, CH-3013 Bern (CH)

(56) Entgegenhaltungen:
- EP-A- 0 109 924
- EP-A- 0 136 510
- DE-A- 3 207 298
- FR-A- 2 466 342
- US-A- 3 863 908

## Beschreibung

Die Erfindung betrifft ein Verfahren zum Herstellen einer Verbundbahn, bei dem jede zu kaschierende Seite einer Substratbahn und eine Kaschierbahn zusammengeführt und mittels einer aus einem Klebstoffauftragwerk stammenden Klebstoffschicht verklebt wird, wobei jede der am Verbund beteiligten Bahnen durch entsprechende Walzen vor dem Zusammenführen mit einer der anderen Bahnen aus ihrer Zulaufrichtung abgelenkt und bis zur Fertigstellung der Verbundbahn ununterbrochen von Walzenoberflächen unterstützt ist, sowie eine Vorrichtung zur Durchführung des Verfahrens.

Derartige Verfahren zur Herstellung einer Verbundbahn sind bekannt. So zeigt die EP-PS 0 109 924 ein Verfahren, bei welchem eine Substratbahn beidseitig mit einem Klebstoff beschichtet wird. Die so beschichtete Substratbahn wird dann über eine der beiden Auftragswalzen, die gemeinsam einen ersten Walzenspalt bilden, zu einem zweiten Walzenspalt geleitet, gebildet von einer Auftragswalze und einer ersten Kaschierwalze. Im zweiten Walzenspalt wird die Substratbahn mit einer über die erste Kaschierwalze zugeführte Kaschierbahn verklebt. Danach werden die beiden miteinander verklebten Bahnen über die erste Kaschierwalze in einen dritten Walzenspalt geleitet, der durch eine zweite Kaschierwalze und die erste Kaschierwalze gebildet wird. Ueber die Zweite Kaschierwalze wird eine zweite Kaschierbahn zugeführt und im dritten Walzenspalt mit den beiden anderen, bereits verklebten Bahnen zu einem Dreifachverbund verklebt.

Mit diesem Verfahren ist es möglich, viele Arten von Verbundbahnen mit unterschiedlichen Materialien der Substratbahn und der Kaschierbahnen und den diesen Materialien, aus denen die verschiedenen Bahnen bestehen, angepassten Klebstoffe zu verwenden. Dabei können auch die Dicken der Bahnen unterschiedlich sein. Die Klebstoffschichtdicken können den jeweiligen Erfordernissen angepasst werden.

Da bei der fertigen Verbundbahn kein Rollverhalten auftreten darf, ist eine Regelung der Spannung aller Bahnen erforderlich. Diese Bahnspannungsregelung ist in grossem Masse von den sie beeinflussenden Temperaturen abhängig, mit welchen die Klebstoffe verarbeitet werden müssen.

Jedes Verbinden von zwei Bahnen, die aus den unterschiedlichsten Materialien bestehen und unterschiedlichste Dicken aufweisen können, verlangt einen bestimmten Klebstoff, der mit einer für ihn charakteristischen Temperatur und einer davon abhängigen Viskosität verarbeitet werden muss. Mit dem oben beschriebenen Verfahren ist es nicht möglich, eine Substratbahn beidseitig mit einer Kaschierbahn zu verbinden, welche aus unterschiedlichen Materialien bestehen und für die Klebstoffe verwendet werden müssen, deren Verarbeitungstemperatur einen grossen Unterschied aufweist. Bis die mit Klebstoff beschichtete Substratbahn mit den Kaschierbahnen verbunden wird, haben sich die beiden unterschiedlichen Temperaturen der Klebstoffe einander angepasst, so dass am Ort, wo die Verbindung mit der Kaschierbahn erfolgt, bereits nicht mehr optimale Temperaturen und demzufolge optimale Viskositäten vorherrschen. Dies kann sich auf die Qualität der Verbindung auswirken.

Bei diesem Verfahren ist auch nicht vorgesehen, dass der Auftrag einer Klebstoffschicht auf diejenige Bahn erfolgt, welche von der Materialbeschaffenheit und der Oberflächenstruktur her gesehen am besten geeignet wäre. Der Klebstoff wird immer auf die Substratbahn aufgetragen, und dies kann sich auf die Klebstoffauftragsmenge auswirken.

Der Erfindung liegt die Aufgabe zugrunde, das bekannte Verfahren zur Herstellung einer Verbundbahn derart weiterzubilden, dass es möglich ist, eine Substratbahn beidseitig mit verschiedenartigen Kaschierbahnen derart zu verkleben, dass die Klebstoffe bezüglich Temperatur und Viskosität in der Verbindungsstelle in optimaler Form vorhanden sind.

Die Aufgabe wird erfindungsgemäss nach den Merkmalen der Kennzeichnung des Anspruches 1 gelöst.

Mit diesem Verfahren ist es möglich, die Kaschierbahnen zu beschichten, was dann von Vorteil ist, wenn aufgrund der Oberflächenstruktur die Kaschierbahn besser geeignet ist zur Aufnahme des Beschichtungsklebstoffes.

Der Klebstoff wird im Auftragwerk auf seine optimale Verarbeitungstemperatur aufgeheizt. Beim Beschichten der Kaschierbahn wird diese unmittelbar nach dem Beschichten mit der Substratbahn verbunden. Da die beschichtete Kaschierbahn vor dem Verbinden mit der Substratbahn mit keiner anderen Walze als der Gegenwalze in Berührung kommt, verändert sich die Temperatur des aufgetragenen Klebstoffes nicht. Der Klebstoff wird in seiner optimalen Form bezüglich Temperatur und Viskosität an der Verbindungsstelle Kaschierbahn-Substratbahn verarbeitet.

Eine weitere Variante besteht darin, dass nur eine Kaschierbahn beschichtet wird, die dann mit der Substratbahn zusammengeführt und verbunden wird und dass die Substratbahn auf der anderen Seite den Klebstoff aufgetragen erhält und anschliessend mit einer unbeschichteten Kaschierbahn zusammengeführt und verbunden wird.

Diese unterschiedlichen Varianten zum Aufbringen des Klebstoffes auf die Substratbahn und/oder die Kaschierbahnen erhöht die Anzahl der Möglichkeiten zur Herstellung von Verbundbahnen aus den verschiedenartigsten Materialien um ein Vielfaches. Die Qualität der Verbundbahnen ist wegen den optimalen Betriebsbedingungen für alle beteiligten Komponenten gewährleistet.

Das erfindungsgemässe Verfahren ist anhand der in der Zeichnung dargestellten Vorrichtung nachfolgend näher beschrieben. Hierbei sind sowohl die Materialbahnen als auch die Klebstoffilme stark übertrieben dick gezeichnet. Es zeigen:
- Fig. 1: eine schematische Darstellung der Vorrichtung, bei der eine Kaschierbahn und eine Seite der Substratbahn mit Klebstoff beschichtet wird, und
- Fig. 2: eine schematische Darstellung der Vorrichtung, bei der beide Kaschierbahnen mit Klebstoff beschichtet und mit der Substratbahn verbunden werden.

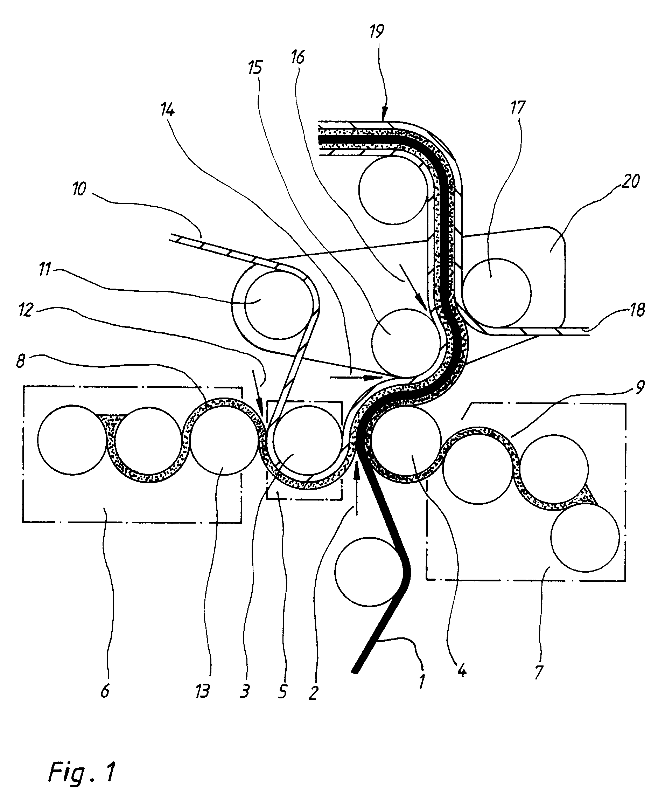

Eine Substratbahn 1 wird gemäss Fig. 1 in einen Walzenspalt 2 eingeführt, welcher durch eine erste Gegenwalze 3 und eine zweite Gegenwalze 4 gebildet wird. Die zweite Gegenwalze 4 ist ortsfest dreh- und antreibbar in nicht dargestellten Maschinenwänden gelagert. Die erste Gegenwalze 3 ist in Lagereinheiten 5 dreh- und antreibbar gelagert. Die Lagereinheiten 5 sind in den Maschinenwänden verstellbar angeordnet, so dass die erste Gegenwalze 3 an die zweite Gegenwalze 4 an- und abstellbar ist. An beide Gegenwalzen 3 und 4 ist je ein Klebstoff-Auftragwerk 6 bzw. 7 in bekannter Weise anstellbar, mit welchen ein genau dosierter Klebstoffilm 8 bzw. 9 erzeugbar ist.

Eine Kaschierbahn 10 wird über eine Umlenkwalze 11 in einen Walzenspalt 12 geleitet, welcher von der ersten Gegenwalze 3 und einer Auftragwalze 13 des Klebstoff-Auftragwerks 6 gebildet wird. Im Walzenspalt 12 wird die Kaschierbahn 10 mit dem durch die Auftragwalze 13 angelieferten Klebstoffilm 8 beschichtet. Die so beschichtete Kaschierbahn 10 wird um die Gegenwalze 3 herumgeführt und im Walzenspalt 2 mit der Substratbahn 1 zusammengeführt und verbunden.

Die zweite Gegenwalze 4 erhält den im Klebstoff-Auftragwerk 7 erzeugten und dosierten Klebstoffilm 9 aufgetragen und überträgt ihn im Walzenspalt 2 auf die Substratbahn 1. Die nun auf der einen Seite mit der Kaschierbahn 10 verbundene und auf der anderen Seite mit dem Klebstoffilm 9 versehenene Substratbahn 1 wird um die zweite Gegenwalze 4 herumgeführt und gelangt in den Walzenspalt 14, der durch die zweite Gegenwalze 4 und eine erste Kaschierwalze 15 gebildet wird. Die einseitig kaschierte und anderseitig beschichtete Substratbahn 1 wird nun um die erste Kaschierwalze 15 geführt und in einen Walzenspalt 16 eingeleitet. Der Walzenspalt 16 ist von der ersten Kaschierwalze 15 und einer zweiten Kaschierwalze 17 gebildet.

Um die zweite Kaschierwalze 17 wird eine zweite Kaschierbahn 18 in den Walzenspalt 16 geführt und mit der mit dem Klebstoffilm 9 versehenen Substratbahn 1 verbunden und verklebt. Die nach dem Verlassen des Walzenspaltes 16 fertiggestellte Verbundbahn 19 wird sodann weggeleitet und beispielsweise einer Aufwickelvorrichtung zugeführt.

Die erste Kaschierwalze 15 und die zweite Kaschierwalze 17 sind auf um die Achse der Umlenkwalze 11 schwenkbaren Schwingen 20 dreh- und antreibbar gelagert. Mit dem Verschwenken der Schwingen 20 ist der Walzenspalt 14 einstellbar. Während die erste Kaschierwalze 15 ortsfest auf den Schwingen 20 gelagert ist, ist die zweite Kaschierwalze 17 verstellbar auf der Schwinge 20 gelagert, derart, dass die zweite Kaschierwalze 17 an die erste Kaschierwalze 15 anstellbar und der Walzenspalt 16 regulierbar ist.

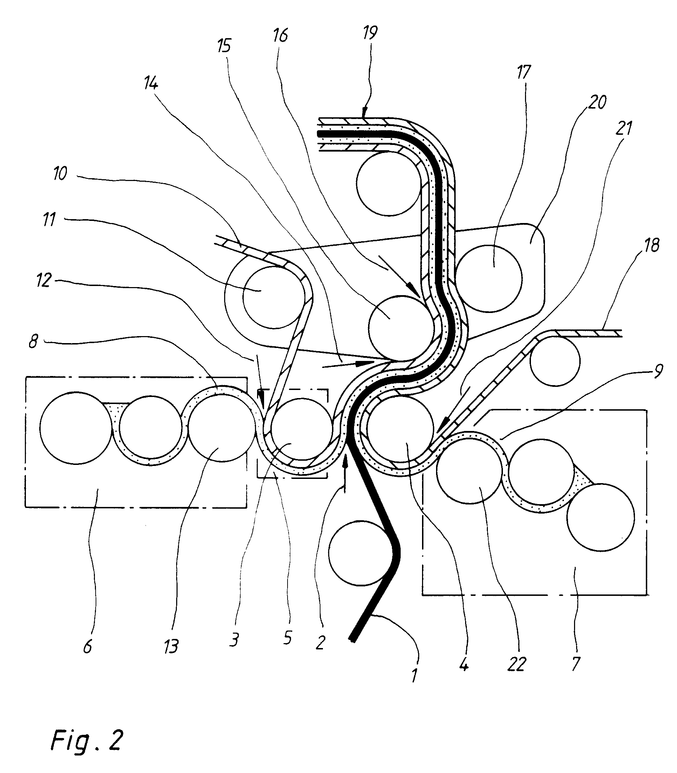

Eine analoge Anordnung zur Herstellung einer Verbundbahn, wie sie in Fig. 1 dargestellt ist, zeigt auch Fig. 2. Die Substratbahn 1 wird wiederum in den Walzenspalt 2 eingeführt und dort, gemäss dem Vorgang nach Fig. 1, mit einer mit einem Klebstoffilm 8 versehenen Kaschierbahn 10, die um die erste Gegenwalze 3 herumgeführt wird, zusammengeführt und verbunden.

Die zweite Kaschierbahn 18 wird in einen Walzenspalt 21 geleitet, welcher von der zweiten Gegenwalze 4 und einer Auftragwalze 22 des Klebstoff-Auftragwerks 7 gebildet wird. Die zweite Kaschierbahn 18 erhält durch die. Auftragwalze 22 den Klebstoffilm 9 aufgetragen, wird um die zweite Gegenwalze 4 herum in den Walzenspalt 2 geführt und dort mit der Substratbahn verbunden und verklebt. Die beidseitige Kaschierung der Substratbahn 1 durch die Kaschierbahnen 10 und 18 erfolgt gleichzeitig im Walzenspalt 2.

Die fertiggestellte Verbundbahn 19 wird dann über die zweite Gegenwalze 4, den Walzenspalt 14, über die erste Kaschierwalze 15 und den Walzenspalt 16 weggeführt.

Für beide in Fig. 1 und Fig. 2 dargestellte Verfahren sind die beiden Gegenwalzen 3 und 4 und die beiden Kaschierwalzen 15 und 17 einerseits regulierbar angetrieben, dass durch individuelle Geschwindigkeitskorrekturen unabhängige Bahnzugbeeinflussungen der Substratbahn 1 und der Kaschierbahnen 10 und 18 möglich sind, andererseits individuell heiz- oder kühlbar, um optimale Temperaturverhältnisse für jeden Verbindungsvorgang zu gewährleisten.

Auch die Auftragwalzen 13 und 22 sind regulierbar angetrieben und heiz- oder kühlbar, so dass zwischen den Auftragwalzen 13 bzw. 22 und den Gegenwalzen 3 bzw. 4 durch unterschiedliche Geschwindigkeiten die entsprechenden Klebstoffilme 8 bzw. 9 "verrieben" werden können.

Durch die gegenseitige Verstellbarkeit der Walzen, die die Walzenspalte 2, 12, 21, 14 und 16 bilden, kann durch die entsprechende Walzenspalteinstellung der jeweilige optimale Anpressdruck für die entsprechenden Bahnen eingestellt werden.

Die direkt am Herstellungsvorgang der Verbundbahn beteiligten Walzen können leicht ausgewechselt werden, so dass für unterschiedliche Bahn- und Klebstoffmaterialien Walzen mit den unterschiedlichsten Oberflächen eingesetzt werden können. So können neben der optimalen Werkstoffwahl für die Walzen auch unterschiedlichste Strukturen wie Rasterung, Rillung oder dergleichen zum Einsatz kommen.

Es ist auch möglich, eines der beiden Klebstoff-Auftragwerke 6 oder 7 abzustellen, so dass die Substratbahn 1 nur auf einer Seite mit einer Kaschierbahn verbunden wird.

## Patentansprüche

1. Verfahren zum Herstellen einer Verbundbahn (19),
a) bei dem jede zu kaschierende Seite einer Substratbahn (1) und eine Kaschierbahn (10) zusammengeführt und mittels einer aus einem Klebstoff-Auftragwerk (6, 7) stammenden Klebstoffschicht (8, 9) verklebt wird,
b) jede der am Verbund beteiligten Bahnen (1, 10, 18) durch entsprechende Walzen (4, 4, 18) vor dem Zusammenführen mit einer der anderen Bahnen (10, 18) aus ihrer Zulaufrichtung abgelenkt und bis zur Fertigstellung der Verbundbahn (19) ununterbrochen von Walzenoberflächen unterstützt ist, dadurch gekennzeichnet, dass,
c) die Substratbahn (1) in einem von einer ersten Gegenwalze (3) und einer zweiten Gegenwalze (4) gebildeten Walzenspalt (2) mit mindestens einer ersten Kaschierbahn (10) zusammengeführt und verklebt wird,
d) die Kaschierbahn (10) im Klebstoffauftragwerk (6) in einen Walzenspalt (12) eingeführt wird, welcher von der ersten Gegenwalze (3) und einer an diese angestellten Auftragwalze (13) des Klebstoff-Auftragwerkes (6) gebildet wird,
e) die Kaschierbahn (10) von der Auftragwalze (13) eine Klebstoffschicht (8) aufgetragen erhält und um die erste Gegenwalze (3) herum in den Walzenspalt (2) geführt und dort mit der Substratbahn (1) verbunden wird.

2. Verfahren nach Anspruch 1, dadurch gekennzeichnet,
- dass die Substratbahn (1) von der zweiten Gegenwalze (4), die mit einer Auftragwalze (22) des Klebstoff-Auftragwerks (7) in Kontakt steht, mit einer Klebstoffschicht (9) versehen wird,
- dass die zweite Kaschierbahn (18) über eine zweite Kaschierwalze (17), die mit einer ersten Kaschierwalze (15) einen Walzenspalt (16) bildet, zugeführt und mit der Substratbahn (1) verbunden wird, wobei eine der beiden gegenseitig aneinander anstellbaren Kaschierwalzen (15) bzw. (17) mit einer der beiden Gegenwalzen (4) bzw. (3) einen Walzenspalt (14) bildet.

3. Verfahren nach Anspruch 1, dadurch gekennzeichnet,
- dass die zweite Kaschierbahn (18) im zweiten Klebstoff-Auftragwerk (7) in einen Walzenspalt (21) eingeführt wird, welcher von der zweiten Gegenwalze (4) und einer an diese angestellte Auftragwalze (22) des zweiten Klebstoff-Auftragwerks (7) gebildet wird,
- dass die zweite Kaschierbahn (18) von der Walze (22) des zweiten Klebstoff-Auftragwerks (7) eine Klebstoffschicht (9) aufgetragen erhält und um die zweite Gegenwalze (4) herum in den Walzenspalt (2) geführt und dort mit der Substratbahn (1) verbunden wird.

4. Vorrichtung zum Herstellen einer Verbundbahn (19),
a) mittels einer aus einem Klebstoffauftragwerk (6, 7) stammenden Klebstoffschicht (8, 9),
b) mit am Verbund beteiligte Bahnen (1, 10, 18), die mit den entsprechenden Walzen (3, 4, 18) vor dem Zusammenführen mit einer anderen Bahn (1, 10, 18) aus ihrer Zulaufrichtung abgelenkt und bis zur Fertigstellung der Verbundbahn (19) ununterbrochen von Walzenoberflächen unterstützt ist. Insbesondere zur Durchführung des Verfahrens nach Anspruch 1, dadurch gekennzeichnet, dass
c) die erste Gegenwalze (3) gegenüber der zweiten Gegenwalze (4) verstellbar ist,
d) das erste Klebstoff-Auftragwerk (6) gegenüber der ersten Gegenwalze (3) und/oder das zweite Klebstoff-Auftragwerk (7) gegenüber der zweiten Gegenwalze (4) verstellbar ist.

5. Vorrichtung nach Anspruch 4, dadurch gekennzeichnet, dass eine der beiden Gegenwalzen (3) oder (4) ortsfest drehbar gelagert ist und die andere Gegenwalze (4) bzw. (3) daran an- und abstellbar angeordnet ist.

6. Vorrichtung nach Anspruch 4 oder 5, dadurch gekennzeichnet, dass alle mit der Substratbahn (1) und den Kaschierbahnen (10) und (18) als Führungswalzen dienende Walzen (3, 4, 15, 17) sowie die Auftragwalzen (13) und (22) mit einem regulierbaren Antrieb versehen sind.

7. Vorrichtung nach einem der Ansprüche 4 bis 6, dadurch gekennzeichnet, dass alle Walzen einzeln temperaturregelbar sind.

8. Vorrichtung nach einem der Ansprüche 4 bis 7, dadurch gekennzeichnet, dass mindestens die Gegenwalzen (3) und (4) und die Kaschierwalzen (15) und (17) auswechselbar sind, so dass Walzen mit unterschiedlichen Oberflächenmaterialien und -strukturen einsetzbar sind.

## Claims

1. A process for producing a laminated web (19),
a) wherein each side of a substrate web (1) for laminating and a lamination web (10) are brought together and are stuck together via an adhesive layer (8, 9) issuing from an adhesive-spreading device (6, 7);
b) each of the webs (1, 10, 18) forming part of the laminated web is diverted from its direction of feed by means of corresponding rolls (4, 4, 18) [*sic*] prior to combination with one of the other webs (10, 18), and is continuously supported by roll surfaces until the laminated web (19) has been completed, **characterised in that**
c) the substrate web (1) is brought together with and stuck to at least a first lamination web (10) in a roll gap (2) formed by a first mating roll (3) and a second mating roll (4);
d) the lamination web (10) is introduced into a roll gap (12) in the adhesive-spreading device (6), the gap being formed by the first mating roll (3) and a spreading roll (13) of the adhesive-spreading device (6), placed near the first mating roll (3);
e) the lamination web (10) receives an applied layer of adhesive (8) from the spreading roll (13) and is guided about the first mating roll (3) into the roll gap (2) and is there joined to the substrate web (1).

2. A process in accordance with claim 1, **characterised in that**
- the substrate web (1) is provided with an adhesive layer (9) via the second mating roll (4) which is in contact with a spreading roll (22) in the adhesive-spreading device (7);
- the second lamination web (18) is delivered via a second lamination roll (17) which forms a roll gap (16) with a first lamination roll (15), and the said web (18) is joined to the substrate web (1), and one of the two lamination rolls (15) or (17), which can be placed near one another, forms a roll gap (14) with one of the two mating rolls (4) or (3).

3. A process in accordance with claim 1, **characterised in that**
- the second lamination web (18) is introduced into a roll gap (21) in the second adhesive-spreading device (7), the roll gap being formed by the second mating roll (4) and a spreading roll (22) in the second adhesive-spreading device (7), the said spreading roll being placed near the second mating roll (4);
- the second lamination web (18) receives an applied adhesive layer (9) from the roll (22) in the second adhesive-spreading device (7) and is guided about the second mating roll (4) into the roll gap (2) and is joined there to the substrate web (1).

4. A device for producing a laminated web (19),
a) by means of an adhesive layer (8, 9) issuing from an adhesive-spreading device (6, 7);
b) with webs (1, 10, 18) forming part of the laminated web, which are diverted from their direction of feed by means of the corresponding rolls (3, 4, 18) [*sic*] prior to combination with another web (1, 10, 18) and are continuously supported by roll surfaces until the laminated web (19) has been completed, particularly to carry out the process in accordance with claim 1, **characterised in that**
c) the first mating roll (3) is adjustable in relation to the second mating roll (4);
d) the first adhesive-spreading device (6) is adjustable in relation to the first mating roll (3) and/or the second adhesive-spreading device (7) is adjustable in relation to the second mating roll (4).

5. A device in accordance with claim 4, **characterised in that** one of the two mating rolls (3) or (4) is mounted to be stationary yet rotatable, and the other mating roll (4) or (3) is arranged so that it can be placed near thereto or distanced therefrom.

6. A device in accordance with claim 4 or 5, **characterised in that** all the rolls (3, 4, 15, 17) acting as guide rolls for the substrate web (1) and the lamination webs (10) and (18), and also the spreading rolls (13) and (22), are provided with a controllable drive unit.

7. A device in accordance with one of claims 4 to 6, **characterised in that** all the rolls are individually temperature-controllable.

8. A device in accordance with one of claims 4 to 7, **characterised in that** at least the mating rolls (3) and (4) and the lamination rolls (15) and (17) are exchangeable, so that rolls with the most widely differing surface materials and structures may be used.

## Revendications

1. Procédé pour fabriquer une bande composite (19), dans lequel :
a) on amène une bande de revêtement (10, 18) en regard de chacune des faces d'une bande de substrat (1) à recouvrir, et on assemble ces bandes par collage au moyen d'une couche d'adhésif (8, 9) débitée par un système d'enduction d'adhésif (6, 7) ;
b) on assure le soutien de chacune des bandes élémentaires à assembler (1, 10, 18) au moyen de rouleaux correspondants (3, 4, 15, 17) avant la rencontre de la bande avec les autres (10, 18), chaque bande élémentaire étant ainsi déviée de sa direction d'arrivée et constamment soutenue par les surfaces des rouleaux jusqu'à la confection complète de la bande composite (19) ; caractérisé en ce que
c) on fait arriver ensemble la bande de substrat (1) avec au moins une première bande de revêtement (10) dans un interstice (2) ménagé entre un premier rouleau d'appui (3) et un deuxième rouleau d'appui (4), et on assemble ces bandes par collage ;
b) on fait passer la bande de revêtement (10) dans un interstice (12) ménagé entre le premier rouleau d'appui (3) et un rouleau enducteur associé (13) du système d'enduction d'adhésif (6) ;
e) on fait alors passer autour du premier rouleau d'appui (3) la bande de revêtement (10) portant une couche d'adhésif (8) déposée par le rouleau enducteur (13), et on engage la bande de revêtement dans l'interstice (2) des rouleaux d'appui (3, 4) pour la fixer sur la bande de substrat (1).

2. Procédé selon la revendication 1, caractérisé en ce que :
- on dépose une couche d'adhésif (9) sur la bande de substrat (1) au moyen du premier rouleau d'appui (4) qui reste en contact avec un rouleau enducteur (22) du système d'enduction d'adhésif (7),
- on fait passer la deuxième bande de revêtement (18) sur un deuxième rouleau de laminage (17) associé à un premier rouleau de laminage (15) et formant un interstice de passage (16) avec celui-ci, et on fixe la deuxième bande de revêtement à la bande de substrat (1), l'un des deux rouleaux de laminage (15) ou (17) montés en regard l'un de l'autre avec un écartement réglable formant un interstice de passage (14) avec l'un des deux rouleaux d'appui (4) ou (3).

3. Procédé selon la revendication 1, caractérisé en ce que :
- on fait passer la deuxième bande de revêtement (18) dans un interstice (21) ménagé entre le deuxième rouleau d'appui (4) et un rouleau enducteur associé (22) du deuxième système d'enduction d'adhésif (7),
- on fait passer autour du deuxième rouleau d'appui (4) la deuxième bande de revêtement (18) portant une couche adhésive (9) déposée par le deuxième système d'enduction d'adhésif (7) et on engage la deuxième bande de revêtement dans l'interstice (2) des rouleaux d'appui (4, 5) pour la fixer à la bande de substrat (1).

4. Dispositif pour fabriquer une bande laminée composite (19),
a) au moyen d'une couche d'adhésif (8, 9) débitée par un système d'enduction d'adhésif (6, 7),
b) en prenant des bandes élémentaires (1, 10, 18) destinées à former la bande composite, ces bandes élémentaires étant déviées chacune de leur direction d'arrivée par des rouleaux correspondants (3, 4, 18) avant leur rencontre avec une autre bande (1, 10, 18), et constamment soutenues par les surfaces des rouleaux jusqu'à la confection complète de la bande composite (19), en particulier pour l'exécution du procédé conforme à la revendication 1, caractérisé en ce que :
c) la position du premier rouleau d'appui (3) est réglable par rapport au deuxième rouleau d'appui (4),
d) la position du premier système d'enduction d'adhésif (6) est réglable par rapport au premier rouleau d'appui (3) et/ou la position du deuxième système d'enduction d'adhésif (7) est réglable par rapport au deuxième rouleau d'appui (4).

5. Dispositif selon la revendication 4, caractérisé en ce que l'un des deux rouleaux d'appui (3) ou (4) est monté rotativement à poste fixe, l'autre rouleau d'appui (4) ou (3) étant réglable pour pouvoir être rapproché et écarté du rouleau fixe.

6. Dispositif selon la revendication 4 ou 5, caractérisé en ce que tous les rouleaux (3, 4, 15, 17) associés à la bande de substrat (1) et aux bandes de revêtement (10) et (18) pour assurer le guidage de ces bandes sont pourvus d'un système d'entraînement réglable, ainsi que les rouleaux d'enduction (13) et (22).

7. Dispositif selon l'une des revendication 4 à 6, caractérisé en ce que tous les rouleaux comportent chacun un système indépendant de réglage de leur température.

8. Dispositif selon l'une des revendications 4 à 7, caractérisé en ce qu'au moins les rouleaux d'appui (3) et (4) ainsi que les rouleaux de laminage (15) et (17) sont interchangeables, afin de permettre la mise en place de rouleaux dont la surface est constituée de différents matériaux et présente différentes structures.
